# EUROPÄISCHE PATENTSCHRIFT

(11) **EP 3 526 843 B1**
(45) Veröffentlichungstag und Bekanntmachung des Hinweises auf die Patenterteilung: **08.12.2021**
(21) Anmeldenummer: 17780095.0
(22) Anmeldetag: 05.10.2017
(51) Int. Cl.: H01M 10/0583, H01M 50/538, H01M 4/04, H01M 10/0525, H01M 10/0562, H01M 4/66, H01M 10/04, H01M 10/0565

(54) **VERFAHREN ZUM HERSTELLEN EINER GALVANISCHEN LITHIUM-IONEN-ZELLE UND GALVANISCHE LITHIUM-IONEN-ZELLE**
METHOD FOR THE PRODUCTION OF GALVANIC LITHIUM-ION CELLS AND GALVANIC LITHIUM-ION CELLS
MÉTHODE POUR LA PRODUCTION DE CELLULES GALVANIQUES LITHIUM ION ET CELLULES GALVANIQUES LITHIUM ION GALVANIQUES

(30) Priorität: 11.10.2016 DE 102016219661
(43) Veröffentlichungstag der Anmeldung: 21.08.2019
(73) Patentinhaber: Vitesco Technologies GmbH, 93055 Regensburg (DE)
(72) Erfinder: KREISSIG, Udo, 09114 Chemnitz (DE); LENK, Andreas, 01728 Bannewitz / OT Possendorf (DE); SCHARF, Uwe, 08373 Remse (DE); MÖLLER, Rene, 07407 Rudolstadt (DE); BÖHM, Rene, 09337 Callenberg / OT Meinsdorf (DE); FUCHS, Jana, 08525 Plauen (DE); HAASE, Daniel, 09116 Chemnitz (DE)
(86) Internationale Anmeldenummer: PCT/EP2017/075305
(87) Internationale Veröffentlichungsnummer: WO 2018/069131

(56) Entgegenhaltungen:
- EP-A1- 2 485 294
- WO-A1-2008/121892
- US-A1- 2014 272 559

## Beschreibung

Die Erfindung betrifft ein Verfahren zum Herstellen einer galvanischen Lithium-Ionen-Zelle. Hierbei wird ein Separator zum räumlichen Trennen eines ersten Elektrodenmaterials der Lithium-Ionen-Zelle von einem zweiten Elektrodenmaterial bereitgestellt. Des Weiteren betrifft die Erfindung eine galvanische Lithium-Ionen-Zelle.

Aus dem Stand der Technik der Fertigung von Lithium-Ionen-Zellen ist es bekannt, auf Ableiterfolien der herzustellenden Zelle ein Elektrodenmaterial aufzubringen. Anschließend werden die Ableiterfolien zurechtgeschnitten. Zwischen jeweils zwei beschichteten Ableiterfolien wird ein Separator angeordnet.

Hierbei erweist es sich als eine Herausforderung sicherzustellen, dass der Separator nicht verletzt beziehungsweise beschädigt wird. Denn ansonsten könnten Elektronen direkt durch den beschädigten Separator hindurch von dem ersten Elektrodenmaterial zu dem zweiten Elektrodenmaterial gelangen. Einen solchen Kurzschluss gilt es zu vermeiden.

Des Weiteren liegen derzeit die Fertigungskosten ohne Berücksichtigung der Materialkosten für Lithium-Ionen-Zellen beziehungsweise Lithium-Ionen-Akkumulatorzellen im Automotivebereich in einer Größenordnung von etwa 100 Euro/kWh. Auch liegt die Leistungsdichte von Lithium-Ionen-Akkumulatoren, wie sie etwa für Batterien von Elektrofahrzeugen oder Hybridfahrzeugen zum Einsatz kommen, bei nur etwa 0,3 kWh/kg. Dieses hohe spezifische Gewicht der Akkumulatoren und die hohen Fertigungskosten sind ein erhebliches Hindernis für eine raschere und weiter gehende Einführung der Elektromobilität.

Die Lithium-Festkörperzelle (lithium solid state battery, SSB), welche sich derzeit noch in der Entwicklung befindet, ist ein vergleichsweise aussichtsreicher Ansatz, um die spezifischen Materialkosten der Akkumulatorzelle zu reduzieren. Wünschenswert ist es jedoch darüber hinaus, auch eine Reduzierung der Fertigungskosten zu erreichen.

Aus der EP 2 485 294 A1 ist eine Lithiumionendünnschichtbatterie bekannt, bei denen eine poröse Cellulosemembran mit Anoden- und Kathodenmaterial beschichtet wird.

Die US 2014/272559 A1 zeigt einen beschichtete Separatorschicht mit Kathoden und Anodenmaterial, die z-förmig gefaltet ist.

WO 2008/121892 beschreibt eine gewellte Elektrodenkernklemmenschnittstelle und ein Verfahren zur Herstellung einer gewellten Elektrodenkernklemmenschnittstelle.

Aufgabe der vorliegenden Erfindung ist es daher, ein verbessertes Verfahren der eingangs genannten Art und eine entsprechend verbesserte Lithium-Ionen-Zelle zu schaffen, die eine reduzierte Bauhöhe aufweisen kann.

Diese Aufgabe wird durch ein Verfahren mit den Merkmalen des Patentanspruchs 1 und durch eine Lithium-Ionen-Zelle mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Herstellen einer galvanischen Lithium-Ionen-Zelle wird zunächst ein Separator bereitgestellt. Der Separator dient dem räumlichen Trennen eines ersten Elektrodenmaterials der Lithium-Ionen-Zelle von einem zweiten Elektrodenmaterial der Lithium-Ionen-Zelle. Des Weiteren verhindert der Separator einen Übertritt von Elektronen von dem ersten Elektrodenmaterial zu dem zweiten Elektrodenmaterial durch den Separator hindurch. Bei dem Verfahren wird das erste Elektrodenmaterial durch Beschichten auf eine erste Seite des Separators aufgebracht. Mit anderen Worten dient also der zunächst unbeschichtet bereitgestellte Separator, welcher in der späteren Zelle die beiden Elektrodenmaterialien voneinander trennt, als Beschichtungsträger. So kann einerseits eine besonders gleichmäßige und durchgängige Verteilung des Elektrodenmaterials auf der ersten Seite des Separators sichergestellt werden. Des Weiteren schützt so das Elektrodenmaterial den Separator bei der weiteren Verarbeitung im Rahmen der Herstellung der Lithium-Ionen-Zelle. Dies macht das Fertigungsverfahren besonders robust und prozesssicher. Entsprechend ist ein verbessertes Verfahren geschaffen.

Das Beschichten kann beispielsweise erfolgen, indem ein fließfähiges beziehungsweise pastöses Ausgangsmaterial auf die Seite des Separators aufgetragen und anschließend der Flüssigkeitsgehalt dieses Ausgangsmaterials verringert wird, insbesondere durch Trocknen in einem Ofen, um das Elektrodenmaterial bereitzustellen. So kann auch eine vergleichsweise dünne und somit Ausgangsmaterial sparende Schicht des Elektrodenmaterials besonders gleichmäßig und flächig auf die Seite des Separators aufgebracht werden.

Die oben genannten Vorteile sind in besonderem Maße gegeben, wenn gemäß einer vorteilhaften Ausgestaltung des Verfahrens das zweite Elektrodenmaterial ebenfalls durch Beschichten auf eine zweite Seite des Separators aufgebracht wird, welche der ersten Seite gegenüberliegt. Auf diese Weise lässt sich nämlich auch auf der zweiten Seite des Separators ein Schutz desselben bereitstellen, und es lässt sich eine besonders gleichmäßige Verteilung des Elektrodenmaterials auch auf der zweiten Seite des Separators erreichen.

Es kann ein Separator zum Einsatz kommen, welcher eine Wanderung der Lithium-Ionen mittels eines flüssigen Elektrolyten von dem ersten Elektrodenmaterial in das zweite Elektrodenmaterial und zurück beim Laden beziehungsweise Entladen der galvanischen Zelle ermöglicht.

Im Hinblick auf die Handhabbarkeit des Separators bei der Fertigung und im Hinblick auf die Materialkosten hat es sich jedoch als vorteilhaft gezeigt, wenn als der Separator ein Festkörperelektrolyt zum Einsatz kommt. Ein solcher fester Ionenleiter ist zwar für die Lithium-Ionen durchlässig, aber er verhindert ein Hindurchtreten der Elektronen durch den Separator.

Bei dem Festkörperelektrolyten kann es sich insbesondere um eine Membran handeln, welche als ionenleitfähiges Polymer ausgebildet ist. Eine derartige, selbsttragende Membran lässt sich nämlich besonders einfach und prozesssicher zumindest einseitig, bevorzugt jedoch zweiseitig, mit dem Elektrodenmaterial beschichten.

Erfindungsgemäß wird in einer Separatoranordnung, welche den Separator und das wenigstens eine durch Beschichten aufgebrachte Elektrodenmaterial umfasst, eine Mehrzahl von Faltstellen ausgebildet. Hierbei wird die Separatoranordnung an aufeinanderfolgenden, insbesondere linienförmigen, Faltstellen in jeweils einander entgegengesetzte Richtungen gefaltet. Durch eine derartige Z-Faltung lässt sich in einem gegebenen Volumen der Lithium-Ionen-Zelle eine besonders große Fläche des Elektrodenmaterials bereitstellen. Zudem lässt sich so sicherstellen, dass sich die einzelnen Lagen der Separatoranordnung aufgrund des über die Mehrzahl der Faltstellen hinweg durchgängigen Separators sehr exakt relativ zueinander positionieren lassen. Denn der Separator hält die einzelnen Lagen der Z-Faltung zusammen.

Wird demgegenüber zwischen einzelnen Ableiterfolien, auf welchen das Elektrodenmaterial angeordnet ist, jeweils ein Separator angeordnet, so kann bei einem derartigen, nicht gefalteten Stapel nur sehr schwer erreicht werden, dass die einzelnen Lagen möglichst genau aufeinander zu liegen kommen. Durch das Z-Falten, also das Falten in die jeweils einander entgegengesetzten Richtungen an den aufeinanderfolgenden Faltstellen, vereinfacht sich somit die Weiterverarbeitung der Separatoranordnung erheblich.

Um das Z-Falten der Separatoranordnung beziehungsweise der Zellstruktur zu ermöglichen, kann zumindest eine der Faltstellen ausgebildet werden, indem an der Faltstelle das wenigstens eine Elektrodenmaterial zumindest teilweise von dem Separator entfernt wird. Dann lässt sich nämlich an der Faltstelle besonders einfach ein Umbiegen der Separatoranordnung realisieren. Das Elektrodenmaterial kann hierbei sowohl in einem kurvenäußeren Bereich der kurvenartigen Faltstelle beziehungsweise Falte als auch, wie erfindungsgemäß vorgesehen ist,in einem kurveninneren Bereich der Faltstelle entfernt werden. Beispielsweise kann in dem wenigstens einen Elektrodenmaterial, etwa mittels eines Lasers, ein Graben beziehungsweise eine Ausnehmung ausgebildet werden, wobei insbesondere der Separator im Bereich dieses Grabens freiliegen kann. Dann lässt sich an dieser Stelle die Separatoranordnung besonders einfach umlegen beziehungsweise falten.

Zusätzlich oder alternativ kann an zumindest einer der Faltstellen das wenigstens eine Elektrodenmaterial in einer gegenüber an die Faltstelle angrenzenden Bereichen verringerten Schichtdicke auf den Separator aufgebracht werden. Auch durch eine derartige Strukturierung lässt sich erreichen, dass die Separatoranordnung an der Faltstelle leichter gefaltet werden kann. Bei dieser Ausbildung der Faltstelle kann ebenfalls die verringerte Schichtdicke sowohl im kurvenäußeren Bereich der Faltstelle also auch im kurveninneren Bereich der Faltstelle vorliegen.

Die Schichtdicke des Elektrodenmaterials kann an der Faltstelle insbesondere auf 0 verringert sein. Dementsprechend kann beim Beschichten der zumindest einen Seite des Separators der bei der weiteren Verarbeitung als Faltstelle dienende Bereich der Separatoranordnung ausgespart bleiben, um das spätere Falten der Separatoranordnung zu erleichtern. Dies kann durch ein sequenzielles beziehungsweise bereichsweises vorgenommenes Beschichten der ersten Seite beziehungsweise der ersten Seite und der zweiten Seite des Separators erfolgen.

Durch ein entsprechendes Strukturieren der Separatoranordnung an den Faltstellen kann sichergestellt werden, dass beim Falten an der jeweiligen Faltstelle keine zu hohen mechanischen Spannungen auftreten.

Um dies zu erreichen, kann zusätzlich an der wenigstens einen Faltstelle eine Dicke des Separators verringert werden. Jedoch wird hierbei dafür gesorgt, dass der Separator dennoch an der Faltstelle weiterhin vorhanden ist, sodass die in Bezug auf die Elektronen elektrisch isolierende Wirkung des Separators erhalten bleibt.

Vorzugsweise wird auf eine Separatoranordnung, welche den Separator und das wenigstens eine durch Beschichten aufgebrachte Elektrodenmaterial umfasst, eine Ableiterschicht aufgebracht. Dann braucht bei der Herstellung der Lithium-Ionen-Zelle nicht mit separaten Ableiterfolien hantiert zu werden, sondern die Ableiterschicht wird ein integraler Bestandteil der Separatoranordnung. Zudem kann so besonders gut ein flächiger Kontakt der Ableiterschicht mit dem Elektrodenmaterial sichergestellt werden. Dies ist einem guten Ableiten des elektrischen Stroms beim Laden beziehungsweise Entladen der Lithium-Ionen-Zelle zuträglich. Des Weiteren vereinfacht es die Handhabung der Separatoranordnung bei der Fertigung der Lithium-Ionen-Zelle, wenn die Ableiterschicht über das Elektrodenmaterial mit dem Separator verbunden ist. Dies gilt beispielsweise, wenn die Separatoranordnung, welche die Ableiterschicht umfasst, an den Faltstellen gefaltet werden soll.

Insbesondere kann auf die beiden durch Beschichten auf den Separator aufgebrachten Elektrodenmaterialien eine jeweilige Ableiterschicht aufgebracht werden. Für das Aufbringen der Ableiterschicht auf das wenigstens eine Elektrodenmaterial kann insbesondere ein rotierender Zylinder eingesetzt werden, auf dessen dem Elektrodenmaterial zugewandter Oberfläche das Ausgangsmaterial für die Ableiterschicht angeordnet ist.

Insbesondere bei der Verwendung von Kupfer für die Ableiterschicht, welche dem Elektrodenmaterial etwa in der Form von Graphit mit eingelagerten Lithium-Ionen zugewandt ist, hat sich des Weiteren die physikalische Gasphasenabscheidung als vorteilhaftes Verfahren zum Aufbringen der Ableiterschicht herausgestellt. Es kann also beispielsweise durch Sputtern, insbesondere Hochrate-Sputtern (Hochgeschwindigkeitssputtern), die Ableiterschicht auf das Elektrodenmaterial aufgebracht werden. Dies gilt in analoger Weise, wenn als Ableiterschicht, welche einem Lithium-Metalloxid als Elektrodenmaterial zugewandt ist, Aluminium mittels physikalischer Gasphasenabscheidung, also beispielsweise durch Sputtern beziehungsweise Hochrate-Sputtern, auf das Elektrodenmaterial aufgebracht wird.

Beim Hochrate-Sputtern (Hochgeschwindigkeitssputtern) kann innerhalb einer kürzeren Zeit eine Ableiterschicht mit einer bestimmten Dicke hergestellt werden, als dies beim Sputtern mit Normalgeschwindigkeit der Fall ist. Dies ist insofern vorteilhaft, als so die Ableiterschichten besonders rasch bereitgestellt werden können. Zudem braucht beim Vorsehen der Ableiterschicht an die Gleichmäßigkeit der Schichtdicke keine besonders hohe Anforderung gestellt zu werden. Auch daher ist beispielsweise das Hochrate-Sputtern zum Ausbilden der Ableiterschichten besonders gut geeignet.

Vorzugsweise wird zwischen der Ableiterschicht und einem elektrischen Leiter eine elektrisch leitende Verbindung hergestellt. Dann kann über den elektrischen Leiter ein Stromfluss hin zu einem elektrischen Anschluss der Lithium-Ionen-Zelle auf besonders einfache Weise erreicht werden.

Insbesondere kann zwischen der Ableiterschicht und einem metallischen Leiter, welcher in einen elektrisch leitenden Klebstoff eingebettet ist, die elektrisch leitende Verbindung hergestellt werden. So ist der metallische Leiter sicher an der Ableiterschicht fixiert, und ein Stromfluss mit besonders geringem Übergangswiderstand lässt sich erreichen. Der metallische Leiter kann insbesondere als im Querschnitt im Wesentlichen runder Draht beziehungsweise als im Wesentlichen bandförmiger, flacher Leiter ausgebildet sein.

Vorzugsweise wird die elektrisch leitende Verbindung zwischen der Ableiterschicht und dem elektrischen Leiter an den Faltstellen hergestellt. Entsprechend kann der elektrische Leiter die Ableiterschicht an den Faltstellen kontaktieren und so für ein besonders gutes Ableiten der Elektronen aus dem zwischen jeweiligen Faltstellen angeordneten Elektrodenmaterial beim Laden beziehungsweise Entladen der Lithium-Ionen-Zelle sorgen.

Insbesondere, wenn die elektrisch leitende Verbindung zwischen der Ableiterschicht und dem elektrischen Leiter an den Faltstellen durch Aufkleben des metallischen Leiters mittels des elektrisch leitenden Klebstoffs sichergestellt wird, kann zugleich für eine gute Fixierung der Separatoranordnung in dem gefalteten Zustand gesorgt werden.

Auch das wenigstens eine Elektrodenmaterial kann durch physikalische Gasphasenabscheidung, insbesondere durch Sputtern, auf den Separator aufgebracht werden. Besonders einfach lässt sich der Beschichtungsprozess jedoch in einem quasi endlosen beziehungsweise kontinuierlichen Verfahren realisieren, wenn das wenigstens eine Elektrodenmaterial mittels wenigstens eines rotierenden Zylinders auf den Separator aufgebracht wird. Hierbei kann auch der Separator über eine Rolle beziehungsweise einen Zylinder geführt werden, sodass eine Beschichtung in einem Rolle-zu-Rolle-Verfahren erreicht werden kann.

Zum Bereitstellen einer Lithium-Ionen-Zelle mit einer gewünschten elektrischen Kapazität braucht dann bloß der insbesondere beidseitig mit dem jeweiligen Elektrodenmaterial beschichtete Separator durchtrennt zu werden. Eine entsprechende Separatoranordnung mit der gewünschten Länge kann dann in ein Gehäuse der Lithium-Ionen-Zelle eingebracht werden. Wenn die Lithium-Ionen-Zelle als sogenannte Pouch-Zelle beziehungsweise Coffeebag-Zelle ausgebildet ist, so ist das Gehäuse aus einem flexiblen, folienartigen Material gebildet. Bei Ausbildung als Lithium-Ionen-Zelle mit einem starren, eigensteifen Gehäuse, kann insbesondere eine Anordnung in einem prismatischen Gehäuse oder Zellgehäuse vorgesehen sein. Insbesondere die gefaltete Separatoranordnung lässt sich nämlich besonders gut in einem solchen Zellgehäuse einer prismatischen Zelle beziehungsweise in einem Zellgehäuse einer Pouch-Zelle derart unterbringen, dass die elektrischen Anschlüsse beziehungsweise die elektrischen Pole der Lithium-Ionen-Zelle gut kontaktiert werden können.

Die erfindungsgemäße galvanische Lithium-Ionen-Zelle ist mittels des erfindungsgemäßen Verfahrens hergestellt. Insbesondere kann die Lithium-Ionen-Zelle hierbei als Festkörperzelle ausgebildet sein.

Zu der Erfindung gehören auch Weiterbildungen der erfindungsgemäßen Lithium-Ionen-Zelle, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Lithium-Ionen-Zelle hier nicht noch einmal beschrieben.

Im Folgenden ist ein Ausführungsbeispiel der Erfindung beschrieben. Hierzu zeigt:
Fig. 1 stark schematisiert eine beidseitig mit Elektrodenmaterial einer Lithium-Ionen-Zelle beschichtete Membran; und
Fig. 2 in einer schematischen Seitenansicht die an einer Mehrzahl von Faltstellen gefaltete Membran, wobei auf die jeweiligen Elektrodenmaterialien aufgebrachte Ableiterschichten mittels eines elektrischen Leiters an den Faltstellen kontaktiert sind.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

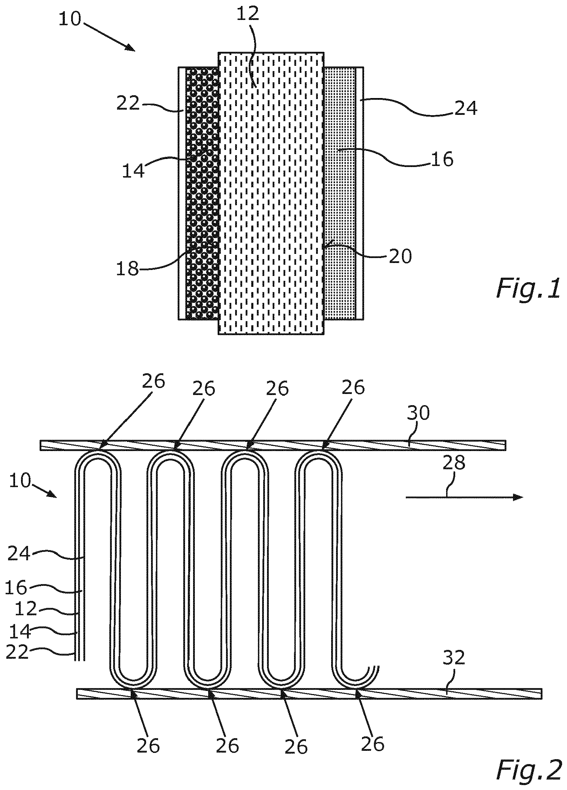

Fig. 1 zeigt ausschnittsweise und schematisiert einen Aufbau einer Separatoranordnung 10 für eine galvanische Lithium-Ionen-Zelle. Hierbei ist durch eine Membran ein Separator 12 bereitgestellt. Der Separator 12 dient der räumlichen Trennung eines ersten Elektrodenmaterials 14, bei welchem es sich beispielsweise um die negative Elektrode der Lithium-Ionen-Zelle handeln kann, von einem zweiten Elektrodenmaterial 16, bei welchem es sich beispielsweise um die positive Elektrode der Lithium-Ionen-Zelle handeln kann. Vorliegend sind beide Elektrodenmaterialien 14, 16 durch Beschichten auf den Separator 12 aufgebracht. Die als Separator 12 dienende Membran ist also beidseitig mit dem jeweiligen Elektrodenmaterial 14, 16 beschichtet.

Beispielsweise ist das erste Elektrodenmaterial 14 durch Beschichten auf eine erste Seite 18 des Separators 12 aufgebracht. Dementsprechend ist das zweite Elektrodenmaterial 16 bei der in Fig. 1 gezeigten Ausgestaltung auf eine zweite Seite 20 des Separators 12 durch Beschichten aufgebracht. Die zweite Seite 20 liegt der ersten Seite 18 des Separators 12 gegenüber. Bei dem ersten Elektrodenmaterial 14 kann es sich insbesondere um Graphit oder dergleichen handeln, in welchen Lithiumionen eingelagert sind. Demgegenüber kann es sich bei dem zweiten Elektrodenmaterial 16 etwa um ein Lithium-Metalloxid handeln.

Vorliegend sind jedoch diese elektrochemisch aktiven Materialien in Form des ersten Elektrodenmaterials 14 und des zweiten Elektrodenmaterials 16 nicht wie ansonsten üblich auf Ableiterfolien aufgebracht, zwischen welchen dann der Separator 12 angeordnet wird. Vielmehr wird der Separator 12 auf der ersten Seite 18 mit dem ersten Elektrodenmaterial 14 beschichtet und auf der gegenüberliegenden Seite 20 mit dem zweiten Elektrodenmaterial 16. Anschließend erfolgt die Weiterverarbeitung der auf diese Weise gebildeten Separatoranordnung 10.

Der Separator 12 kann insbesondere als Festkörperelektrolyt ausgebildet sein. Dann handelt es sich bei der galvanischen Lithium-Ionen-Zelle, welche die Separatoranordnung 10 aufweist, um eine Festkörperzelle beziehungsweise einen Festkörperackumulator, bei welchem sowohl die Elektroden als auch der Elektrolyt aus festem Material bestehen. Der Separator 12 trennt die Elektrodenmaterialien 14, 16 räumlich und sorgt dafür, dass zwar Ionen, vorliegend also die Lithium-Ionen, durch den Separator 12 hindurchtreten können. Demgegenüber ist der Separator 12 für Elektronen nicht leitend. Beim Laden beziehungsweise Entladen der Lithium-Ionen-Zelle erfolgt dementsprechend der Stromfluss von dem ersten Elektrodenmaterial 14 hin zum zweiten Elektrodenmaterial 16 beziehungsweise vom zweiten Elektrodenmaterial 16 hin zum ersten Elektrodenmaterial 14 über einen entsprechenden (vorliegend nicht gezeigten) externen Stromkreis.

Im Rahmen der weiteren Verarbeitung der Separatoranordnung 10 zur Herstellung der Lithium-Ionen-Zelle wird vorzugsweise auf das jeweilige Elektrodenmaterial 14, 16 eine jeweilige Ableiterschicht 22, 24 aufgebracht. Beispielsweise kann für die negative Elektrode, welche durch das erste Elektrodenmaterial 14 gebildet sein kann, als Ableiterschicht 22 eine Lage aus Kupfer aufgebracht werden. Demgegenüber kann auf die positive Elektrode, welche durch das zweite Elektrodenmaterial 16 gebildet ist, als die Ableiterschicht 24 eine Lage aus Aluminium aufgebracht werden.

Die so gebildete Separatoranordnung 10, welche auch die beiden Ableiterschichten 22, 24 umfasst, wird anschließend gefaltet (vergleiche Fig. 2). Hierfür werden in der Separatoranordnung 10 mehrere, jeweils geradlinige Faltstellen 26 ausgebildet. An den in eine Stapelrichtung 28 aufeinanderfolgenden Faltstellen 26 wird die Separatoranordnung 10 in jeweils einander entgegengesetzte Richtungen gefaltet. Die Stapelrichtung 28 ist in Fig. 2 durch einen Pfeil veranschaulicht.

Um ein derartiges Z-Falten der Separatoranordnung 10 durch Umbiegen beziehungsweise Umlegen der Separatoranordnung 10 an der jeweiligen Faltstelle 26 zu erleichtern, kann an der jeweiligen Faltstelle 26 eine entsprechende Struktur vorgesehen sein. Beispielsweise kann in dem jeweiligen Elektrodenmaterial 14, 16 ein Graben oder eine derartige Vertiefung hergestellt werden, beispielsweise mittels eines Lasers. An dieser Stelle ist dann die Dicke der jeweiligen Elektrode beziehungsweise des Elektrodenmaterials 14, 16 verringert.

Insbesondere kann hier, also an der jeweiligen Faltstelle 26 das Elektrodenmaterial 14, 16 vollständig vom Separator 12 entfernt sein. Auch kann sich die Struktur wie etwa der Graben bis in den Separator 12 hinein erstrecken. Das Ausbilden derartiger Strukturen, welche die Weiterverarbeitung der Separatoranordnung 10 durch das in Fig. 2 veranschaulichte Z-Falten erleichtern, erfolgt bevorzugt vor dem Aufbringen der jeweiligen Ableiterschicht 22, 24 auf das Elektrodenmaterial 14, 16. Durch die entsprechenden Strukturen an den Faltstellen 26 kann dafür gesorgt werden, dass beim Z-Falten an den Faltstellen 26 keine zu hohen mechanischen Spannungen entstehen.

Vorliegend wird die Ableiterschicht 22 welche auf dem ersten Elektrodenmaterial 14 angeordnet ist, mittels eines ersten elektrischen Leiters 30 kontaktiert. Als dieser erste elektrische Leiter 30 kann beispielsweise ein metallischer Leiter, etwa in Form eines Drahts, zum Einsatz kommen, welcher in einen leitfähigen Klebstoff eingebettet ist. Dieser flexible Leitkleber kontaktiert die gestapelte beziehungsweise gefaltete Separatoranordnung 10 an den Faltstellen 26. Durch den ersten elektrischen Leiter 30 ist somit eine Weiterkontaktierung sichergestellt. Über den Leiter 30 werden die Elektronen etwa beim Entladen der Lithium-Ionen-Zelle zu einem elektrischen Anschluss beziehungsweise elektrischen Pol der (vorliegend nicht gezeigten) Batteriezelle beziehungsweise Lithium-Ionen-Zelle geleitet. Beim Laden werden dementsprechend die Elektronen über den Leiter 30 zugeführt.

In analoger Weise kontaktiert ein zweiter elektrischer Leiter 32 die Ableiterschicht 24, welche auf das zweite Elektrodenmaterial 16 aufgebracht ist, an weiteren linienförmigen Faltstellen 26 der Separatoranordnung 10. Die weiteren Faltstellen 26 liegen denjenigen Faltstellen 26 gegenüber, an welchen der erste elektrische Leiter 30 die Ableiterschicht 22 kontaktiert. Auch der zweite elektrische Leiter 32 kann als Leitkleber ausgebildet sein und dementsprechend einen metallischen Leiter umfassen, welcher in einen elektrisch leitenden Klebstoff eingebettet ist. Der zweite elektrische Leiter 32 sorgt dementsprechend für das Ableiten der Elektronen hin zu dem anderen elektrischen Pol (beziehungsweise) der Lithium-Ionen-Zelle beziehungsweise Batteriezelle beim Laden beziehungsweise für das Zuführen der Elektronen von dem Pol beim Entladen.

Die Elektrodenmaterialien 14, 16, jedoch insbesondere die Ableiterschichten 22, 24, können beispielsweise durch Hochrate-Sputtern (Hochgeschwindigkeitssputtern) aufgebracht sein. So lassen sich besonders einfach dünne und das jeweilige Elektrodenmaterial 14, 16 beziehungsweise an den Faltstellen 26 zumindest den Separator 12 flächig bedeckende Ableiterschichten 22, 24 bereitstellen.

Insbesondere die Elektrodenmaterialien 14, 16 können jedoch auch mittels rotierender Zylinder, also in einem Rolle-zu-Rolle-Verfahren, auf den Separator 12 aufgebracht werden. Dann braucht lediglich nach dem Beschichten einer bestimmten, in die Stapelrichtung 28 messbaren Länge der Separatoranordnung 10 der mit den Elektrodenmaterialien 14, 16 beschichtete Separator 12 durchtrennt zu werden (insbesondere nachdem auf die Elektrodenmaterialien 14, 16 die Ableiterschichten 22, 24 aufgebracht wurden), um eine entsprechende Lithium-Ionen-Zelle mit einer bestimmten oder gewünschten elektrischen Kapazität bereitzustellen.

Insgesamt zeigt das Beispiel, wie durch die Erfindung eine galvanische Zelle mit beschichteter Membran bereitgestellt werden kann.

## Patentansprüche

1. Verfahren zum Herstellen einer galvanischen Lithium-Ionen-Zelle, bei welchem ein Separator (12) zum räumlichen Trennen eines ersten Elektrodenmaterials (14) der Lithium-Ionen-Zelle von einem zweiten Elektrodenmaterial (16) bereitgestellt wird,
das erste Elektrodenmaterial (14) durch Beschichten auf eine erste Seite (18) des Separators (12) aufgebracht wird,
eine Mehrzahl von Faltstellen (26) ausgebildet wird, und
bei einer Separatoranordnung (10), welche den Separator (12) und das wenigstens eine durch Beschichten aufgebrachte Elektrodenmaterial (14, 16) umfasst, an aufeinanderfolgenden Faltstellen (26) in jeweils einander entgegengesetzte Richtungen gefaltet wird, wobei
das Elektrodenmaterial (14, 16) zumindest in einem kurveninneren Bereich der Faltstelle (26) entfernt wird.

2. Verfahren nach Anspruch 1, wobei das zweite Elektrodenmaterial (16) durch Beschichten auf eine zweite, der ersten Seite (18) gegenüberliegende Seite (20) des Separators (12) aufgebracht wird.

3. Verfahren nach Anspruch 1 oder 2, wobei als der, insbesondere durch eine Membran gebildete, Separator (12) ein Festkörperelektrolyt verwendet wird.

4. Verfahren nach einem der vorstehenden Ansprüche, wobei zumindest eine der Faltstellen (26) ausgebildet wird, indem an der Faltstelle (26) das wenigstens eine Elektrodenmaterial (14, 16) zumindest teilweise von dem Separator (12) entfernt wird und/oder indem an zumindest einer der Faltstellen (26) das wenigstens eine Elektrodenmaterial (14, 16) in einer gegenüber an die Faltstelle (26) angrenzenden Bereichen, insbesondere auf 0, verringerten Schichtdicke auf den Separator (12) aufgebracht wird.

5. Verfahren nach einem der vorstehenden Ansprüche, wobei an der wenigstens einen Faltstelle (26) eine Dicke des Separators (12) verringert wird.

6. Verfahren nach einem der Ansprüche 1 bis 5, wobei auf eine Separatoranordnung (10), welche den Separator (12) und das wenigstens eine durch Beschichten aufgebrachte Elektrodenmaterial (14, 16) umfasst, durch physikalische Gasphasenabscheidung und/oder mittels eines rotierenden Zylinders, wenigstens eine Ableiterschicht (22, 24) aufgebracht wird.

7. Verfahren nach Anspruch 6, wobei zwischen der Ableiterschicht (22, 24) und einem elektrischen Leiter (30, 32), zwischen der Ableiterschicht (22, 24) und einem in einen elektrisch leitenden Klebstoff eingebetteten metallischen Leiter, eine elektrisch leitende Verbindung hergestellt wird.

8. Verfahren nach Anspruch 7 in dessen Rückbezug auf einen der Ansprüche 1 bis 6, wobei die elektrisch leitende Verbindung zwischen der Ableiterschicht (22, 24) und dem elektrischen Leiter (30, 32) an den Faltstellen (26) hergestellt wird.

9. Verfahren nach einem der Ansprüche 1 bis 8, wobei das wenigstens eine Elektrodenmaterial (14, 16) mittels wenigstens eines rotierenden Zylinders auf den Separator (12) aufgebracht wird.

10. Galvanische Lithium-Ionen-Zelle, welche mittels eines Verfahrens nach einem der Ansprüche 1 bis 9 hergestellt ist, wobei die Lithium-Ionen-Zelle als Festkörperzelle ausgebildet ist.

## Claims

1. Method for producing a galvanic lithium-ion cell, wherein a separator (12) is provided in order to spatially separate a first electrode material (14) of the lithium-ion cell from a second electrode material (16), the first electrode material (14) is applied to a first side (18) of the separator (12) by coating,
a multiplicity of folding points (26) is formed, and
in a separator arrangement (10) that comprises the separator (12) and the at least one electrode material (14, 16) applied by coating, folding is performed in mutually opposing directions at consecutive folding points (26), wherein
the electrode material (14, 16) is removed at least in a region on the inside of the curve of the folding point (26).

2. Method according to Claim 1, wherein the second electrode material (16) is applied to a second side (20), which lies opposite the first side (18), of the separator (12) by coating.

3. Method according to Claim 1 or 2, wherein a solid-state electrolyte is used as the separator (12), which is in particular formed by a membrane.

4. Method according to one of the preceding claims, wherein at least one of the folding points (26) is formed by at least partly removing the at least one electrode material (14, 16) from the separator (12) at the folding point (26) and/or by applying, at at least one of the folding points (26), the at least one electrode material (14, 16) to the separator (12) with a layer thickness that is reduced in comparison with regions adjoining the folding point (26), in particular reduced to 0.

5. Method according to one of the preceding claims, wherein a thickness of the separator (12) is reduced at the at least one folding point (26).

6. Method according to one of Claims 1 to 5, wherein at least one collector layer (22, 24) is applied to a separator arrangement (10) that comprises the separator (12) and the at least one electrode material (14, 16) applied by coating, by physical vapour deposition and/or by way of a rotating cylinder.

7. Method according to Claim 6, wherein an electrically conductive connection is produced between the collector layer (22, 24) and an electrical conductor (30, 32), between the collector layer (22, 24) and a metal conductor embedded in an electrically conductive adhesive.

8. Method according to Claim 7 when referring back to one of Claims 1 to 6, wherein the electrically conductive connection is produced at the folding points (26) between the collector layer (22, 24) and the electrical conductor (30, 32).

9. Method according to one of Claims 1 to 8, wherein the at least one electrode material (14, 16) is applied to the separator (12) by way of at least one rotating cylinder.

10. Galvanic lithium-ion cell, produced by way of a method according to one of Claims 1 to 9, wherein the lithium-ion cell is designed as a solid-state cell.

## Revendications

1. Procédé de fabrication d'une pile galvanique à ions lithium, dans lequel
un séparateur (12) est prévu pour séparer spatialement un premier matériau d'électrode (14) de la pile à ions lithium d'un deuxième matériau d'électrode (16),
le premier matériau d'électrode (14) est appliqué par revêtement sur une première face (18) du séparateur (12),
une pluralité de plis (26) est formée, et dans le cas d'un ensemble formant séparateur (10) qui comprend le séparateur (12) et l'au moins un matériau d'électrode (14, 16) appliqué par revêtement, est plié dans des directions mutuellement opposées au niveau de plis successifs (26),
le matériau d'électrode (14, 16) étant retiré au moins dans une zone du pli (26) située à l'intérieur de la courbe.

2. Procédé selon la revendication 1, le deuxième matériau d'électrode (16) étant appliqué par revêtement sur une deuxième face (20) du séparateur (12) qui est opposée à la première face (18).

3. Procédé selon la revendication 1 ou 2, un électrolyte solide étant utilisé comme séparateur (12), notamment formé par une membrane.

4. Procédé selon l'une des revendications précédentes, au moins un des plis (26) étant formé par retrait au moins partiel de l'au moins un matériau d'électrode (14, 16) du séparateur (12) au niveau du pli (26) et/ou par application, au niveau d'au moins un des plis (26), de l'au moins un matériau d'électrode (14, 16) sur le séparateur (12) avec une épaisseur de couche réduite, en particulier à 0, par rapport à celle des zones adjacentes au pli (26).

5. Procédé selon l'une des revendications précédentes, une épaisseur du séparateur (12) étant réduite au niveau de l'au moins un pli (26).

6. Procédé selon l'une des revendications 1 à 5, au moins une couche déflectrice (22, 24) étant appliquée sur un ensemble formant séparateur (10), qui comprend le séparateur (12) et l'au moins un matériau d'électrode (14, 16) appliqué par revêtement, par dépôt physique en phase gazeuse et/ ou au moyen d'un cylindre rotatif.

7. Procédé selon la revendication 6, une liaison électriquement conductrice étant réalisée entre la couche déflectrice (22, 24) et un conducteur électrique (30, 32), entre la couche déflectrice (22, 24) et un conducteur métallique noyé dans un adhésif électriquement conducteur.

8. Procédé selon la revendication 7 en référence à l'une des revendications 1 à 6, la liaison électriquement conductrice entre la couche déflectrice (22, 24) et le conducteur électrique (30, 32) étant réalisée au niveau des plis (26).

9. Procédé selon l'une des revendications 1 à 8, l'au moins un matériau d'électrode (14, 16) étant appliqué sur le séparateur (12) au moyen d'au moins un cylindre rotatif.

10. Pile galvanique à ions lithium, laquelle est fabriquée au moyen d'un procédé selon l'une des revendications 1 à 9, la pile à ions lithium étant conçue comme une pile à l'état solide.
